# EUROPÄISCHE PATENTSCHRIFT

(11) **EP 1 454 805 B1**
(45) Veröffentlichungstag und Bekanntmachung des Hinweises auf die Patenterteilung: **06.12.2006**
(21) Anmeldenummer: 04004833.2
(22) Anmeldetag: 02.03.2004
(51) Int. Cl.: B60R 22/10, B60R 22/14, B60N 2/28

(54) **Schulterpolster für einen Kindersitz sowie Gurtsystem für einen Autokindersitz**
Shoulder pad and safety belt system for children's seat for vehicles
Coussinet d'épaule et ceinture de sécurité pour siège d'enfant pour véhicules

(30) Priorität: 04.03.2003 DE 10309529
(43) Veröffentlichungstag der Anmeldung: 08.09.2004
(73) Patentinhaber: Van Riesen GmbH u. Co. KG, D-32130 Enger (DE)
(72) Erfinder: Friedrich, Matthias, 32120 Hiddenhausen (DE)
(74) Vertreter: Hemmer, Arnd

(56) Entgegenhaltungen:
- EP-A- 0 501 623
- EP-A- 1 338 485
- NL-C- 1 011 428

## Beschreibung

Die Erfindung betrifft ein Schulterpolster für einen Kindersitz, insbesondere Auto-Kindersitz.

Beispielsweise aus DE 692 00 116 T2 und EP 0 501 623 B1 sind Schulterpolster für Gurtsysteme von Auto-Kindersitzen bekannt. Die Schulterpolster sind unterhalb der Schultergurte, d. h. zwischen den Schultergurten und den Schultern eines Insassen angeordnet. Ferner sind die Schulterpolster an der Rückenlehne des Kindersitzes mittels Befestigungsgurten bzw. Befestigungselementen befestigt. Diese Befestigung ist jedoch so ausgestaltet, dass im Falle einer starken Beschleunigung, wie Sie bei einem Unfall auftritt, die Befestigungselemente sich von der Rückenlehne lösen, so dass das Schulterpolster sich gemeinsam mit dem Oberkörper des Insassen nach vorne verlagern kann. Dabei kommt es zu einer Gleitbewegung zwischen Schulterpolster und Schultergurt, bei welcher eine möglichst hohe Reibung zur Energieabsorbtion erwünscht ist.

Nachteilig bei dieser Konstruktion ist, dass eine recht hohe Vorverlagerung des Kindes in dem Kindersitz bei einer dynamischen Belastung zugelassen wird.

Aus NL 10 11 428 ist ein Kinderrückhaltesystem bekannt, bei welchem ein Schulterpolster fest an der Rückenlehne eines Kindersitzes befestigt ist. Das Schulterpolster weist eine zentrale Durchgangsöffnung auf, durch welche das Gurtband geführt ist. Bei diesem Gurtsystem stellt sich jedoch die Problematik, dass die Energieabsorbtion im Gurtsystem geringer ist, so dass sowohl Kind als auch Autokindersitz höheren Belastungen ausgesetzt werden.

Es ist daher Aufgabe der Erfindung, ein verbessertes Gurtsystem für einen Auto-Kindersitz zu schaffen, welches es ermöglicht, die Vorveriagerung des zurückzuhaltenden Kindes bei einer dynamischen Belastung des Sitzes zu reduzieren, um das Verletzungsrisiko zu minimieren.

Diese Aufgabe wird durch ein Schulterpolster mit den im Anspruch 1 angegebenen Merkmalen sowie durch ein Gurtsystem mit den im Anspruch 10 angegebenen Merkmalen gelöst. Bevorzugte Ausführungsformen ergeben sich aus den Unteransprüchen.

Das erfindungsgemäße Schulterpolster weist ein Trägerteil und einen auf dem Trägerteil angeordneten Energieabsorber auf. Im eingebauten Zustand kommt der Energieabsorber auf den Schultern bzw. dem Oberkörper eines Kindes in dem Kindersitz zu liegen. Ferner ist erfindungsgemöß zwischen dem Trägerteil und dem Energieabsorber ein Verstärkungselement vorgesehen, welches fest mit einem Befestigungsgurt zur Verbindung mit dem Kindersitz verbunden ist. Dabei wird der Befestigungsgurt fest an der Rückenlehne des Kindersitzes angebracht bzw. angelenkt, so dass er auch bei einer starken Beschleunigung, wie sie bei einem Unfall auftritt, nicht von dem Kindersitz abreißt bzw. getrennt wird. Das Verstärkungselement zwischen Trägerteil und Energieabsorber gewährt dabei eine ausreichend große Stabilität des gesamten Schulterpolsters, so dass das Schulterpolster oder dessen Teile nicht von dem Befestigungsgurt und damit von der Rückenlehne des Kindersitzes abreißen können. So wird auch im Falle einer starken Beschleunigung der Oberkörper des Kindes zurückgehalten, so dass insgesamt die Vorverlagerung des Kindes aufgrund des erfindungsgemäßen Schulterpolsters verringert werden kann. Das Schulterpolster ist so ausgelegt, dass das Schulterpolster auch bei starker Beschleunigung fest mit dem Sitz verbunden bleibt und es zu einer Bewegung des Oberkörpers des Kindes bzw. von dessen Schultern relativ zu dem Schulterpolster kommt. Dabei tritt eine Reibung zwischen den Schultern und dem Energieabsorber auf, so dass die Beschleunigungsenergie des Kindes absorbiert werden kann und insgesamt die Vorverlagerung des Kindes aufgrund der auftretenden Beschleunigungen verringert werden kann. Das Trägerteil besteht vorzugsweise aus Polyethylen-Schaum und auch der Energieabsorber ist bevorzugt aus einem Polyethylen-Schaum als Formpressteil ausgebildet. Trägerteil und Energieabsorber können auch aus einem anderen geeigneten Werkstoff, vorzugsweise Kunststoff gefertigt sein.

Das Verstärkungselement ist eine Gewebelage. Beispielsweise kann das Verstärkungselement aus Kunststoff, aus einem Metall- oder Kohlefasergewebe, etc. gefertigt sein. Entscheidend ist, dass ein ausreichend reißfestes Material eingesetzt wird, welches bei geringer Dicke dem Schulterpolster die erforderliche Stabilität gibt. Bevorzugt ist ein Nylon-/Polyestergewebe, welches die gewünschte Festigkeit aufweist.

Das Verstärkungselement ist vorzugsweise mit dem Befestigungsgurt fest vernäht oder einstückig mit diesem ausgebildet. So kann das Verstärkungselement einstückig aus demselben Gewebe wie der Befestigungsgurt ausgebildet sein. Alternativ sind die Elemente so fest vernäht, dass auch im Falle einer großen auftretenden Beschleunigung das Verstärkungselement nicht von dem Befestigungsgurt abreißen kann.

Das Schulterpolster ist zweckmäßigerweise so ausgebildet, dass ein Gurtband zwischen dem Energieabsorber und dem Trägerteil derart aufnehmbar ist, dass es durch das Schulterpolster hindurch verläuft. Das Gurtband ist dabei der Schultergurt eines Gurtsystems, welche beweglich durch das Schulterpolster hindurch verläuft, um die Verstellbarkeit des Gurtsystems zur Anpassung an verschiedene Körpergrößen zu gewährleisten.

Weiter bevorzugt ist das Gurtband zwischen dem Energieabsorber und dem Verstärkungselement derart aufnehmbar, dass es durch das Schulterpolster hindurch verläuft. Das bedeutet, der Energieabsorber liegt zwischen dem Gurtband und der Schulter bzw. dem Oberkörper des in dem Kindersitz sitzenden Kindes. Durch möglichst körpernahe Anordnung des Gurtbandes wird ein gutes Rückhaltevermögen gewährleistet. Um eine gute Führung des Gurtbandes in dem Schulterpolster zu ermöglichen kann auf der dem Gurtband zugewandten Seite des Energieabsorbers eine Nut zur Aufnahme des Gurtbandes ausgebildet sein.

Das Schulterpolster ist bevorzugt an seinem dem Sitz bzw. der Rückenlehne des Sitzes zugewandten Ende von einem ringförmigen Polsterelement umgeben. Dieses ringförmige Polsterelement bildet das eigentliche Schultergurtpolster, welches auf der Schulter aufliegt. Dieses Polsterelement wird vorzugsweise aus einem Polyesterschaumstoff gefertigt und ist mit Stoff ummantelt. Das ringförmige Polsterelement umgibt dabei das Ende des Schulterpolsters mit dem hindurch laufenden Gutband und dem Befestigungsgurt zur Anlenkung an der Rückenlehne des Sitzes.

Weiter bevorzugt ist das Schulterpolster an seinem dem Sitz bzw. der Rückenlehne des Sitzes zugewandten Ende verjüngt ausgebildet. Das bedeutet, das Schulterpolster weist an zumindest einer Seite eine Stufe auf, so dass das Schulterpolster an seinem einen Ende schmaler als im übrigen Bereich ausgebildet sein kann. Dabei weist das Schulterpolster in diesem schmalen Bereich eine Breite auf, welche mindestens der Breite des aufzunehmenden Gurtbandes und des anzulenkenden Befestigungsgurtes entspricht. Das Polsterelement, welches das eigentliche Schultergurtpolster bildet, wird vorzugsweise in diesem verjüngten Bereich des Schulterpolsters angeordnet. Die Verjüngung des Schulterpolsters in diesem Bereich ermöglicht eine bessere Führung über die Schulter, ohne dass das Schulterpolster in Kontakt mit dem Hals des Kindes tritt, da das in diesem Bereich angeordnete Polsterelement an zumindest einer Seite des Schulterpolsters weniger oder gar nicht über dessen Seitenkante vorsteht.

Vorzugsweise sind das Trägerteil und der Energieabsorber an ihren äußeren Umfangskanten durch ein gemeinsames Kantenband umschlossen. Das Kantenband umgibt die gesamte äußere Umfangskante des Schulterpolsters und verbessert somit zum einen das optische Erscheinungsbild des Schulterpolsters und bietet einen Schutz vor Verletzungen an den Kanten der in dem Schulterpolster verbauten Elemente, wie dem Trägerteil, dem Verstärkungselement, dem Energieabsorber und dem durchlaufenden Gurtband. Das Kantenband ist vorzugsweise ein Samt-Schnittband aus Polyester und/oder Polyamid.

Das Verstärkungselement ist im Wesentlichen deckungsgleich zu dem Trägerteil ausgebildet. D. h. das Verstärkungselement weist im Wesentlichen dieselbe Form wie das Trägerteil auf, so dass es flächig auf dem gesamten Trägerteil aufliegen kann. Auf diese Weise wird eine besonders hohe Festigkeit des Schulterpolsters erreicht und ein Abreißen einzelner Elemente des Schulterpolsters verhindert.

Die erfindungsgemäße Aufgabe wird ferner durch ein Gurtsystem für einen Auto-Kindersitz gelöst, welches zumindest zwei Gurtbänder aufweist, welche die Schultergurte des Gurtsystems bilden. An diesen Gurtbändern ist jeweils ein Schulterpolster gemäß der vorangehenden Beschreibung angeordnet. Ein solches Gurtsystem ist geeignet, die Vorverlagerung des Oberkörpers des Kindes bei auftreten Beschleunigungen zu verringern, da die Beschleunigungsenergie des Oberkörpers im Wesentlichen durch den Kontakt bzw. Reibung mit dem Energieabsorber abgebaut wird, während das Schulterpolster fest an einem Kindersitz gehalten werden kann.

Nachfolgend wird die Erfindung beispielhaft anhand der beigefügten Figuren beschrieben. In diesen zeigt:
- Fig. 1: eine perspektivische Ansicht eines Gurtbandes mit dem erfindungsgemäßen Schulterpolster von oben,
- Fig. 2: eine Ansicht des Schulterpolsters gemäß Fig. 1 von unten und
- Fig. 3: eine Explosionsansicht des Schulterpolsters gemäß Figuren 1 und 2.

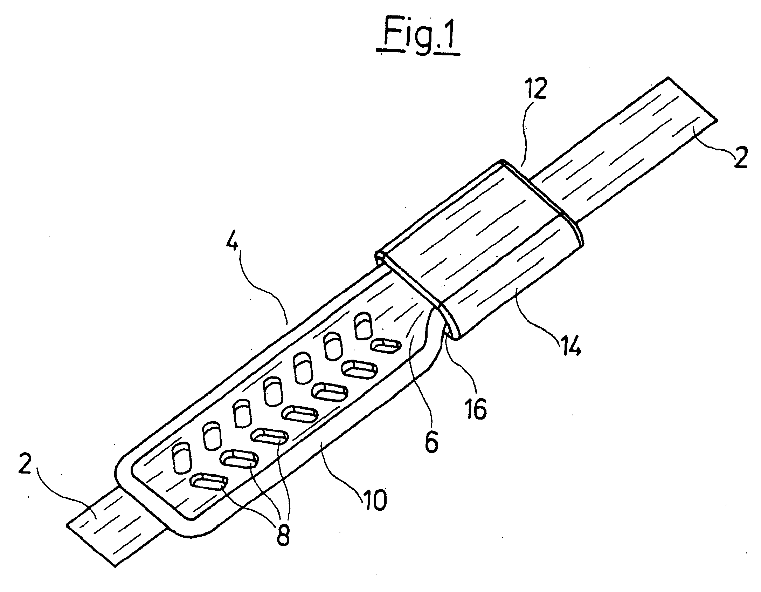

Fig. 1 zeigt eine schematische Ansicht eines Schultergurtes 2 mit aufgesetztem Schulterpolster 4. Dabei ist das Gurtband 2 durch das Schultepolster 4 in dessen Längsrichtung hindurchgeführt. Das Schulterpolster 4 weist an einer Seite ein Trägerteil 6 auf, unter dem das Gurtband 2 hindurchgeführt ist. Dabei verlaufen das Gurtband 2 und das Trägerteil 6 parallel zueinander. In dem Trägerteil 6 ist eine Vielzahl von Löchern 8 ausgebildet. An der Unterseite des Schulterpolsters 4, d. h. an der dem Trägerteil 6 entgegengesetzten Seite des Gurtbandes 2 ist ein in Fig. 1 nicht gezeigter Energieabsorber angeordnet. Der Energieabsorber und das Trägerteil 6 sind an Ihrer Umfangskante von einem Kantenband 10 umgeben, welches die Kanten schützend umschließt, um Verletzungen an den Kanten zu verhindern. An dem Ende 12 des Schulterpolsters 4, welches im eingebauten Zustand einer Rückenlehne des Kindersitzes zugewandt ist, ist ein ringförmiges Polsterelement 14 angeordnet, welches das Schulterpolster und einen in Fig. 1 nicht gezeigten Befestigungsgurt sowie das Gurtband 2 umschließt. Das bedeutet, dass das Schulterpolster 4 und das Gurtband 2 sich durch das Innere des Polsterelementes 14 hindurch erstrecken.

Das Polsterelement 14 bildet dabei das eigentliche Schultergurtpolster, welches mit der Schulter eines Kindes in Kontakt kommt. In dem Bereich des Endes 12, in dem das Polsterelement 14 angeordnet ist, ist das Schulterpolster 14 an zumindest einer Seite verjüngt ausgebildet bzw. weist eine Stufe bzw. Ausnehmung 16 auf, in der das Polsterelement 14 angeordnet ist, so dass das Polsterelement 14 an dieser Seite des Schulterpolsters 4 nicht nach Außen vorsteht.

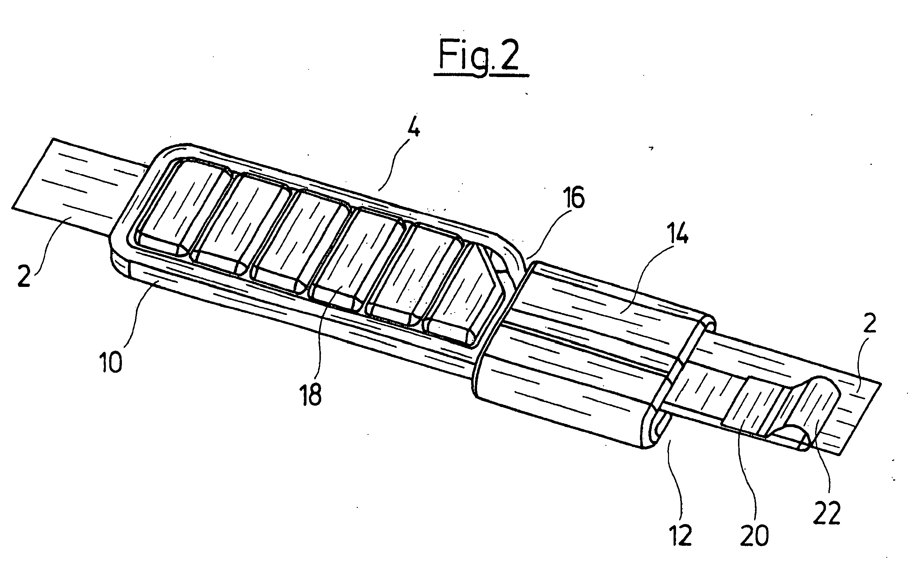

Fig. 2 zeigt eine Ansicht des Schulterpolsters 4 gemäß Fig. 1 von unten. An der Unterseite des Schulterpolsters 4 ist ein Energieabsorber 18 angeordnet. Das in Fig. 1 gezeigte Trägerteil 6 und der Energieabsorber 18 liegen parallel aufeinander und weisen im Wesentlichen dieselbe Außenkontur auf, welche von dem Kantenband 10 umgeben wird. Das Gurtband 2, welches den Schultergurt bildet, verläuft in Längsrichtung des Schulterpolsters 4 zwischen dem Energieabsorber 18 und dem Trägerteil 6 durch das Schulterpolster 4 hindurch. Am Ende 12 des Schulterpolsters 4 ist an diesem ein Befestigungsgurt 20 angebracht. Dabei ist der Befestigungsgurt 20 fest mit dem Schulterpolster 4 bzw. einem im Inneren angeordneten Verstärkungselement verbunden, so dass ein Abreißen des Schulterpolsters 4 von dem Befestigungsgurt 20 nicht möglich ist. Am freien Ende des Befestigungsgurtes 20 ist eine Befestigungsschlaufe 22 ausgebildet, mittels derer der Befestigungsgurt 20 und damit das Schulterpolster 4 an der Rückenlehne des Kindersitzes, insbesondere an der Rückseite der Rückenlehne befestigt wird. Dabei wird der Befestigungsgurt 20 so an dem Kindersitz befestigt, dass er sich auch bei starken Beschleunigungen, wie sie bei einem Unfall auftreten, nicht von dem Sitz lösen kann. So wird das Schulterpolster in einer festen Position gehalten, so dass eine Vorverlagerung des Oberkörpers des Kindes nur relativ zu dem Schulterpolster 4 und insbesondere zu dem Energieabsorber 18 erfolgt, wobei durch den Energieabsorber 18 die Bewegungsenergie absorbiert und damit die Vorverlagerung des Oberkörpers gering gehalten werden kann.

Wie in Fig. 2 zu sehen ist, verläuft das Gurtband 2 oberhalb des Befestigungsgurtes 20, so dass dieser parallel zu dem Gurtband 2 unter diesem angeordnet ist. Das Kantenband 10 umgibt am äußeren Umfang des Schulterpolsters 4 die Kanten von Trägerelement 6 (siehe Fig. 1) und Energieabsorber 18.

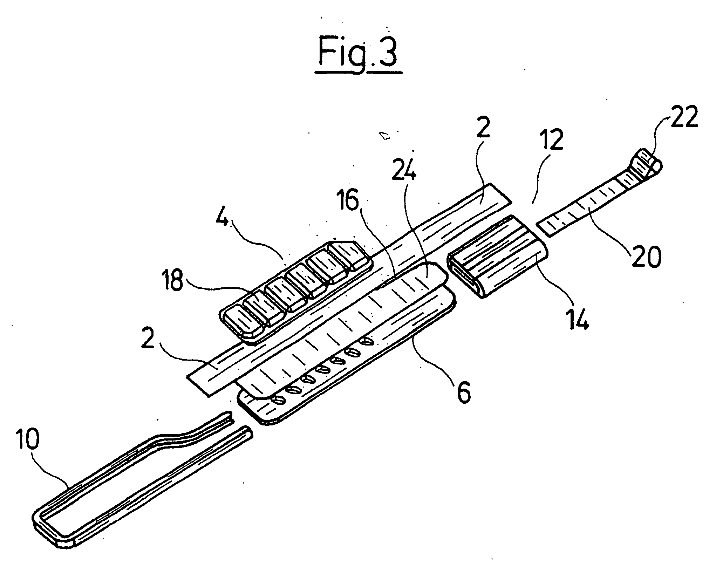

Fig. 3 zeigt eine Explosionsansicht des in Figuren 1 und 2 gezeigten Schulterpolsters. Wie in Fig. 3 zu sehen ist, ist zwischen dem Energieabsorber 18 und dem Trägerteil 6 ein Verstärkungselement 24 in Form einer Gewebeeinlage angeordnet. Bei der Gewebeeinlage 24 handelt es sich um ein besonders reißfestes Gewebe, welches am Ende 12 des Schulterpolsters 4 mit dem Befestigungsgurt 20 vernäht, verschweißt oder in anderer Weise reißfest verbunden ist, so dass die Gewebelage 24 auch bei starken Beschleunigungen während eines Unfalls nicht von dem Befestigungsgurt 20 abreißen kann. Die Gewebelage 24 weist im Wesentlichen dieselbe Außenkontur wie das Trägerteil 6 auf und ist mit dem Trägerteil 6 und dem Energieabsorber 18 am Außenumfang verbunden und durch das Kantenband 10 umgeben. Auf diese Weise wird durch die Gewebeeinlage 24 ein besonders festes Schulterpolster geschaffen, welches auch bei hohen Beschleunigungen fest an dem Kindersitz gehalten werden kann. Das Gurtband 2 verläuft so durch das Innere des Schulterpolsters 4 hindurch, dass es zwischen Energieabsorber 18 und Gewebeeinlage 24 gelegen ist. Dazu ist in der dem Gurtband 2 zugewandten Seite des Energieabsorbers 18 eine Nut ausgebildet, in welcher das Gurtband 2 aufgenommen ist, so dass das Gurtband 2 bei Verstellung des Gurtsystems leicht im Inneren des Schulterpolsters 4 in dessen Längsrichtung bewegt werden kann.

Das Polsterelement 14 ist ein aus einem Schaummaterial gefertigtes, stoffummanteltes Polsterelement, welches zu einem Ring bzw. einer Schlaufe vernäht oder verheftet ist. Das Polsterelement 14 wird so auf das verjüngte Ende 12 des Schulterpolsters 4 aufgeschoben, dass sich das Ende des Schulterpolsters 4 mit dem Befestigungsgurt 20 und dem Gurtband 2 durch das Polsterelement 14 hindurch erstreckt, wie in Figuren 1 und 2 gezeigt ist.

### Bezugszeichenlist

- 2: Gurtband
- 4: Schulterpolster
- 6: Trägerteil
- 8: Löcher
- 10: Kantenband
- 12: Ende
- 14: Polsterelement
- 16: Ausnehmung
- 18: Energieabsorber
- 20: Befestigungsgurte
- 22: Gurtschlaufe
- 24: Verstärkungselement

## Patentansprüche

1. Schulterpolster (4) für einen Kindersitz mit einem Trägerteil (6), einem auf dem Trägerteil (6) angeordneten Energieabsorber (18) sowie einem zwischen dem Trägerteil (6) und dem Energieabsorber (18) angeordneten Verstärkungselement (24) **dadurch gekennzeichnet, dass** das Verstärkungselement (24) als Gewebelage ausgebildet ist und fest mit einem Befestigungsgurt (20) verbunden ist, wobei der Befestigungsgurt zur festen Anbringung an der Rückenlehne eines Kindersitzes vorgesehen ist.

2. Schulterpolster (4) nach Anspruch 1, bei welchem der Befestigungsgurt (20) mit dem Verstärkungselement (24) fest vernäht ist oder einstückig mit dem Verstärkungselement (24) ausgebildet ist.

3. Schulterpolster (4) nach einem der vorangehenden Ansprüche, bei welchem ein Gurtband (2) zwischen dem Energieabsorber (18) und dem Trägerteil (6) derart aufnehmbar ist, dass es durch das Schulterpolster (4) hindurch verläuft.

4. Schulterpolster (4) nach einem der vorangehenden Ansprüche, bei welchem ein Gurtband (2) zwischen dem Energieabsorber (18) und dem Verstärkungselement (24) derart aufnehmbar ist, dass es durch das Schulterpolster (4) hindurch verläuft.

5. Schulterpolster (4) nach einem der vorangehenden Ansprüche, welches an seinem dem Sitz zugewandten Ende (12) von einem ringförmigen Polsterelement (14) umgeben ist.

6. Schulterpolster (4) nach einem der vorangehenden Ansprüche, bei welchem das dem Sitz zugewandte Ende (12) des Schulterpolsters (4) verjüngt ausgebildet ist.

7. Schulterpolster (4) nach einem der vorangehenden Ansprüche, bei welchem das Trägerteil (6) und der Energieabsorber (18) an ihren äußeren Umfangskanten durch ein gemeinsames Kantenband (10) umschlossen sind.

8. Schulterpolster (4) nach einem der vorangehenden Ansprüche, bei welchem das Verstärkungselement (24) deckungsgleich zu dem Trägerteil (6) ausgebildet ist.

9. Gurtsystem für einen Auto-Kindersitz mit zumindest zwei Gurtbändern (2), an denen jeweils ein Schulterpolster (4) gemäß einem der vorangehenden Ansprüche angeordnet ist.

## Claims

1. A shoulder pad (4) for a child's seat, with a carrier part (6), an energy absorber (18) arranged on the carrier part (6), as well as a reinforcement element (24) arranged between the carrier part (6) and the energy absorber (18), **characterised in that** the reinforcement element (24) is designed as a fabric layer and is firmly connected to a fastening belt (20), wherein the fastening belt is provided for the firm attachment on the back rest of a child's seat.

2. A shoulder pad (4) according to claim 1, with which the fastening belt (20) is firmly sewn to the reinforcement element (24), or is designed with the reinforcement element (24) as one piece.

3. A shoulder pad (4) according to one of the preceding claims, with which a belt strap (2) may be accommodated between the energy absorber (18) and the carrier part (6) in a manner such that it runs through the shoulder pad (4).

4. A shoulder pad (4) according to one of the preceding claims, with which a belt strap (2) may be accommodated between the energy absorber (18) and the reinforcement element (24) in a manner such that it runs through the shoulder pad (4).

5. A shoulder pad (4) according to one of the preceding claims, which at its end (12) facing the seat is surrounded by an annular cushion element (14).

6. A shoulder pad (4) according to one of the preceding claims, with which the end (12) of the shoulder cushion (4) facing the seat is designed in a tapered manner.

7. A shoulder pad (4) according to one of the preceding claims, with which the carrier part (6) and the energy absorber (18) at their outer peripheral edges are enclosed by a common edge strap (10).

8. A shoulder pad (4) according to one of the preceding claims, with which the reinforcement element (24) is designed congruently to the carrier part (6).

9. A belt system for a car child's seat with at least two belt straps (2) on which in each case a shoulder cushion (4) according to one of the preceding claims is arranged.

## Revendications

1. Rembourrage d'épaule (4) pour un siège pour enfant, comportant une pièce de support (6), un absorbeur d'énergie (18) disposé sur la pièce de support (6), ainsi qu'un élément de renforcement (24) disposé entre la pièce de support (6) et l'absorbeur d'énergie (18), **caractérisé en ce que** l'élément de renforcement (24) est réalisé sous forme d'une couche de tissu et est relié solidement à une ceinture de fixation (20), la ceinture de fixation étant prévue pour un attachement ferme au dossier d'un siège pour enfant.

2. Rembourrage d'épaule (4) selon la revendication 1, dans lequel la ceinture de fixation (20) est cousue solidement avec l'élément de renforcement (24) ou est réalisée en une seule pièce avec l'élément de renforcement (24).

3. Rembourrage d'épaule (4) selon l'une des revendications précédentes, dans lequel une sangle de ceinture (2) peut être reçue entre l'absorbeur d'énergie (18) et la pièce de support (6), d'une manière telle qu'elle passe à travers le rembourrage d'épaule (4).

4. Rembourrage d'épaule (4) selon l'une des revendications précédentes, dans lequel une sangle de ceinture (2) peut être reçue entre l'absorbeur d'énergie (18) et l'élément de renforcement (24), d'une manière telle qu'elle passe à travers le rembourrage d'épaule (4).

5. Rembourrage d'épaule (4) selon l'une des revendications précédentes, qui, à son extrémité (12) tournée vers le siège, est entouré d'un élément de rembourrage (14) de forme annulaire.

6. Rembourrage d'épaule (4) selon l'une des revendications précédentes, dans lequel l'extrémité (12), tournée vers le siège, du rembourrage d'épaule (4) est dotée d'une forme effilée.

7. Rembourrage d'épaule (4) selon l'une des revendications précédentes, dans lequel la pièce de support (6) et l'absorbeur d'énergie (18) sont, à leurs bords périphériques extérieurs, enserrés par une bande de bordure (10) commune.

8. Rembourrage d'épaule (4) selon l'une des revendications précédentes, dans lequel l'élément de renforcement (24) est d'une configuration coïncidant avec celle de la pièce de support (6).

9. Système de ceintures pour un siège auto pour enfant comportant au moins deux sangles de ceinture (2), sur chacune desquelles est disposé un rembourrage d'épaule (4) conforme à l'une des revendications précédentes.
